(19) Europäisches Patentamt / European Patent Office / Office européen des brevets

(11) **EP 2 120 037 B1**

(12) **EUROPEAN PATENT SPECIFICATION**

(45) Date of publication and mention
of the grant of the patent:
**25.01.2017 Bulletin 2017/04**

(51) Int Cl.:
***B82Y 35/00*** *(2011.01)*     ***G01Q 70/04*** *(2010.01)*

(21) Application number: **08009133.3**

(22) Date of filing: **16.05.2008**

(54) **Measuring probe for a scanning microscope and method of operation thereof**

Messsonde für ein Scanmikroskop und Betriebsverfahren dafür

Sonde de mesure pour microscope à balayage et son procédé de fonctionnement

(84) Designated Contracting States:
**DE FR GB IT**

(43) Date of publication of application:
**18.11.2009 Bulletin 2009/47**

(73) Proprietors:
- **Mitutoyo Corporation
Kawasaki-shi, Kanagawa 213-8533 (JP)**
- **Bundesrepublik Deutschland
endvertreten durch den Präsidenten der
Physikalisch-Technischen Bundesanstalt
38116 Braunschweig (DE)**

(72) Inventors:
- **Illers, Hartmut
38729 Hahausen (DE)**

- **Hidaka, Kazuhiko
5684 PJ Best (NL)**
- **Saito, Akinori
Tsukuba-shi, Ibaraki-ken 305-0854 (JP)**
- **Danzebrink, Dr. Hans-Ullrich
38124 Braunschweig (DE)**

(74) Representative: **Grünecker Patent- und
Rechtsanwälte
PartG mbB
Leopoldstraße 4
80802 München (DE)**

(56) References cited:
EP-A- 0 527 601     EP-A- 1 653 478
DE-A1- 10 112 316     JP-A- 2002 162 219

**Description**

The present invention generally relates to the technical field of measuring instruments, in particular scanning microscopes such as, for example, atomic force microscopes, scanning tunnel microscopes and near-field optical microscopes, and to coordinate measuring machines. In particular, the present invention relates to a measuring probe and a method of operating a measuring probe for a scanning microscope or a coordinate measuring machine.

In modem technology, components having dimensions of the order of magnitude of micrometers or less are employed. Examples of such components include components of micro-electro-mechanical systems (MEMS) and magnetic read/write heads for hard disks. The quality of such components may be influenced by the level of roughness of the surface of the components on length-scales on the order of magnitude of nanometers. In order to assess the quality of the components, it is desirable to perform measurements both on length scales of micrometers and on length scales of nanometers.

Scanning probe microscopy techniques such as atomic force microscopy, scanning tunnel microscopy and optical near field microscopy are able to resolve details having dimensions of the order of magnitude of nanometers. In response to the availability of increasingly robust systems, their industrial application is becoming widespread. The field of view accessible by means of techniques of scanning microscopy, however, is limited by the relatively slow scan speed of scanning microscopes according to the state of the art.

Optical far-field microscopy, on the other hand, allows fast measurements over a relatively large field of view of up to an order of magnitude of millimeters. The resolution of optical far-field microscopy, however, is limited by diffraction. Therefore, features smaller than the wavelength of light may not be resolved by optical far-field microscopy. Therefore, it has been proposed to combine an optical microscope and a scanning microscope into a single instrument.

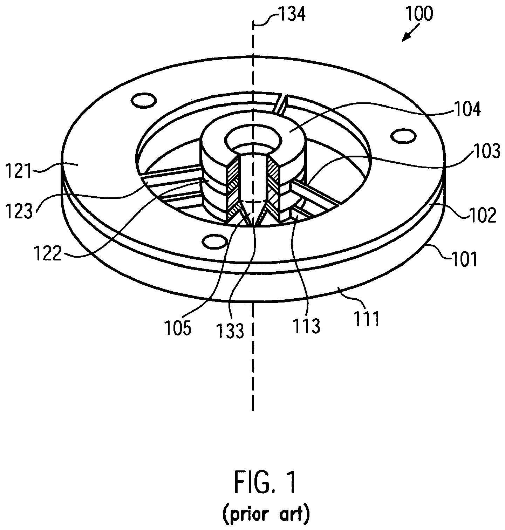

EP 1 653 478 discloses an instrument according to the state of the art wherein a surface texture measuring probe 100, which will be described in the following with reference to Fig. 1, is provided between the front lens of an optical microscope and an object to be investigated. The measuring probe 100 comprises a probe head 105 which may comprise a tip of an atomic force microscope or scanning tunneling microscope, or an aperture having a diameter smaller than the wavelength of light for optical near field microscopy.

The measuring probe 100 further comprises a first supporting body 101 that supports the probe head 105 and a second supporting body 102 coupled to the first supporting body 101.

The first supporting body 101 includes a first supporter 111 having a plurality of beams 113. The beams 113 extend from equiangular arrangement positions of the first supporter 111 towards the center and support the probe head 105 at the center of the inner space of the first supporter 111. The second supporting body 102 includes a second supporter 121 coupled to the first supporter 111. A plurality of beams 123 extend from equiangular arrangement positions of the second supporter 121 toward the center. A holder 122 is supported by the beams 123. Additionally, a balancer 104 having a mass equal to that of the probe head 105 may be provided.

A vibration element 103 is disposed between the probe head 105 and the holder 122 of the second support body 102 and is adapted to vibrate in an axial direction of an axis 134 penetrating through the center of the first and second supporting bodies.

The measuring probe 100 may be arranged in front of an objective of an optical far field microscope such that the axis 134 is aligned with the optical axis of the microscope and the measuring probe 100 is provided between the objective and the object to be investigated. Since the diameter of the probe head 105, the vibration element 103, the holder and the balancer 104 may be smaller than the entrance pupil of the microscope objective, the optical far field microscope may view the object to be investigated through the spaces between the beams 113, 123.

When the vibration element 103 is operated, the balancer 104 and the probe head 105 move relative to each other in an oscillatory manner. Thus, a distance between the probe head 105 and the object to be investigated and correspondingly, an interaction between the probe head 105 and the object to be investigated is altered periodically. The periodic alteration of the interaction between the probe head 105 and the object to be investigated may be detected using known techniques of atomic force microscopy, scanning tunneling microscopy or optical near field microscopy.

A problem of the measuring probe 100 according to the state of the art is that the beams 113, 123 are deformed to a relatively large extent during the operation of the vibration element 103. This may limit the available amplitude of the oscillation the probe head 105.

A further problem of the measuring probe 100 according to the state of the art is that the amplitude of the oscillation of the probe head 105 is approximately equal to the amplitude of oscillation provided by the vibration element 103. Therefore, the vibration element 103 must be adapted to provide the amplitude of oscillation required for scanning microscopy. This may become difficult when trying to reduce the stiffness of the vibration element 103 to a range of values that is small enough to match the needs for atomic force microscopy.

Another problem of the measuring probe 100 according to the state of the art is that the balancer 104 and the holder 122 vibrate as the vibration element 103 is operated. Thus, the distance between the balancer 104 and the holder 122 on the one hand and the objective of the optical microscope on the other hand is oscillating during the operation of the vibration element 103, wherein an amplitude of the oscillation of the balancer 104 and the holder 122 may be substantially equal to the amplitude of oscillation of the probe head 105. This may adversely affect interferometric height measurements wherein the balancer 104 and/or the holder 122 is used as a mirror of an interferometer.

JP 2002-162219 A relates to a highly precise moving mechanism which comprises a coarse moving mechanism, a fine moving mechanism and a balance of mass which can balance reaction forces of a driving mechanism of the fine moving mechanism.

Yet another problem of the measuring probe 100 according to the state of the art is that the precision of the measurement may be adversely affected by Brown's motion of components of the measuring probe 100.

It is an object of the present invention to provide a measuring probe for a measuring instrument such as a scanning microscope allowing a greater amplitude of oscillation of a measuring tip of the scanning microscope.

It is a further object of the present invention to provide a measuring probe for a measuring instrument such as a scanning microscope having a high sensitivity for atomic force measurements.

Another object of the present invention is to provide a measuring probe for a measuring instrument such as a scanning microscope wherein relatively precise interferometric height measurements of the tip may be performed.

Yet another object of the present invention is to provide a measuring probe for a measuring instrument such as a scanning microscope wherein an adverse influence of Brown's motion on the precision of measurements may be reduced.

A measuring probe for a measuring instrument such as a scanning probe microscope according to claim 1 of the present invention comprises a body having a measuring tip connected thereto and an actuator element adapted to exhibit a force between a first part of the body and a second part of the body. The body has an elastic mode of oscillation wherein an amplitude of a displacement of the first part of the body relative to the second part of the body is smaller than an amplitude of a displacement of the measuring tip relative to a rest position of the measuring tip.

The modes of oscillation of the elastic body are structural features of the body. They may depend on the shape of the body. Additionally, the modes of oscillation may depend on the material or materials from which the body is formed, in particular on elastic constants and the density thereof. For a body having a specific shape and comprising specific materials, the modes of oscillation may be determined theoretically, for example by calculating substantially periodic solutions of the elastic equation of motion of the body, or may be determined experimentally, for example by resonant excitation of the elastic modes of oscillation. To excite an elastic mode of oscillation of the body, an alternating current having a predetermined frequency may be supplied to the actuator element, and an amplitude of a displacement of a portion of the body may be measured in response thereto. If the frequency of the alternating current corresponds to the frequency of an elastic mode of oscillation of the body, a peak of the amplitude of displacement may be observed.

The elastic mode of oscillation of the measurement probe may be excited by operating the actuator element, and a vibration of the tip having an amplitude of oscillation which is greater than the amplitude of oscillation provided by the actuator element can be obtained. Correspondingly, a force which is exhibited on the tip by the measuring probe may be smaller than the force exhibited by the actuator element on the measuring probe. Hence, the measuring probe according to the present invention may act as a mechanical analogue of a transformer, wherein a relatively large force and a relatively small amplitude of oscillation at the location of the actuator element are transformed to a relatively small force and a relatively large amplitude of oscillation at the location of the tip. Thus, an amplitude of oscillation of the tip may be increased compared to measurement probes according to the state of the art.

In the measuring probe according to the present invention, a piezoelectric actuator element comprising a hard piezoelectric material having a moderately high piezoelectric coupling may be used, since the relatively large force and relatively small amplitude of oscillation provided by such piezoelectric materials can be transformed to the relatively large amplitude of oscillation and relatively small force which may be desirable for scanning microscopy applications.

Interferometric measurements of the height of the tip can be performed by means of light reflected at portions of the measurement probe having a relatively small amplitude of displacement in the elastic mode of oscillation of the measuring probe, such that an adverse influence of the vibration of the measurement probe on the precision of the interferometric measurements may be reduced.

Furthermore, an influence of Brown's motion on the motion of the measurement tip may be reduced, since components of the measurement probe such as, for example, the actuator element, since an amplification of Brownian lattice motions in the body may be substantially avoided or at least reduced.

The body comprises a stylus and a first countermass. The tip is provided at a first end of the stylus and the actuator element is provided between a second end of the stylus and the first countermass.

A portion of the stylus in the vicinity of the actuator element may provide an elasticity which allows an elastic oscillation of the tip and a portion of the stylus adjacent the tip relative to the countermass. Thus, the elasticity of the measuring probe may be provided by the stylus. The stylus can be a monolithic unit, which may help to improve the stability of the elastic mode of oscillation of the measuring probe. Compared to known scanning microscopes wherein a measuring tip is provided at an end of a sideways cantilever, providing the stylus and the countermass may help to reduce an adverse influence of Brownian motion on the scanning microscopy, since an amplification of Brownian motion, which may be caused by a sideways cantilever, may be substantially avoided or at least reduced.

In some embodiments, the stylus may be detachably connected to the actuator element and the first countermass. Thus, the stylus and the tip may be exchanged in a convenient manner in case of a deterioration of the tip.

In some embodiments, the first countermass may comprise a mirror portion for optical measurement of a position of the first countermass. Thus, a position of the measuring probe may be determined by means of interferometric measurements.

In some embodiments, the elastic mode of oscillation may comprise a longitudinal oscillation of the stylus. This allows a substantially rotationally symmetric configuration of the measuring probe, which may facilitate an arrangement of the measuring probe in front of the entrance pupil of an optical far field microscope. Additionally, a longitudinal vibration of the tip may allow a relatively high resonance frequency in combination with a moderate Q-factor of the elastic mode of oscillation, which may allow to scan the surface of the object to be investigated at a relatively high scanning speed.

In some embodiments, the measuring probe may further comprise a second countermass. The second countermass can be provided between the second end of the stylus and the actuator element. In the elastic mode of oscillation, the first countermass and the tip may oscillate in the same direction, and the second countermass may oscillate in the opposite direction, wherein an amplitude of a displacement of the second countermass may be smaller than an amplitude of the displacement of the first countermass and an amplitude of the displacement of the tip. Hence, the second countermass may provide a point of attachment for a support element connecting the measuring probe to other portions of a scanning microscope.

In some embodiments, at least one of a mass of the first countermass, a mass of the second countermass and a sum of the mass of the second countermass and the mass of the first countermass can be greater than a mass of the stylus. Thus, an amplitude of a displacement of the first mass and/or the second mass may be smaller than an amplitude of the displacement of the tip. Additionally or alternatively, in some embodiments, the mass of the first countermass can be greater than the mass of the second countermass. These relationships between the masses of the components allow to provide a relatively large amplitude of oscillation of the measuring tip and a relatively small amplitude of oscillation of the first and/or the second countermass.

In some embodiments, the second end of the stylus can be fixed to the second countermass and the actuator element may connect the second countermass to the first countermass. Thus, the portion of the stylus in adjacent the second end may provide a first elastic element, and the actuator element and/or a portion of the second countermass adjacent the actuator may provide a second elastic element. This arrangement may allow to provide a particularly efficient mechanical coupling between the actuator element and the elastic mode of oscillation of the measuring probe.

In some embodiments, the measuring probe may further comprise a damping element adapted to reduce a Q-factor of elastic modes of oscillation of the body other than the desired mode of oscillation wherein the displacement of the tip relative to the rest position of the tip is greater than the displacement of the first part of the body relative to the second part. Thus, undesirable modes of oscillation of the body may be suppressed in an efficient manner.

In some embodiments, the damping element may comprise a support element adapted for attachment of the body to another component of the scanning microscope.

In some embodiments wherein the body comprises a stylus, a first countermass and a second countermass, wherein the tip is provided at a first end of a stylus and a second end of the stylus is connected to the second countermass, the actuator element may connect the first countermass to the second countermass and the support element may be attached to the second countermass. Since, in the desired elastic mode of oscillation of the body, an amplitude of the displacement of the second countermass may be relatively low, a damping of the desired elastic mode of oscillation of the body may be reduced. This may help to provide a moderately large Q-factor of the desired mode of oscillation while reducing the Q-factor of undesirable modes of oscillation.

In some embodiments, the actuator element may comprise a piezoelectric material, a first electrode, a second electrode and a power source adapted to apply a voltage of operation being smaller than a maximum voltage of operation between the first and the second electrode. The piezoelectric material is provided between the first and the second electrode. The piezoelectric material has a coercive field greater than an electric field strength occurring in the piezoelectric material if the maximum voltage of operation is applied between the first electrode and the second electrode, greater than two times the electric field strength and/or greater than ten times the electric field strength.

Thus, a swapping of the polarization of piezoelectric domains in the piezoelectric material under typical conditions of operation of the measuring probe may substantially be avoided. This may help to reduce a mechanical damping caused by the piezoelectric material, thus enabling a relatively high mechanical Q-factor of the elastic mode of oscillation of the body. Moreover, electrical noise caused by the swapping of the polarization of the piezoelectric domains may be reduced, which may allow simultaneously using the actuator for actuation and sensing. Hence, the measuring probe may be operated in a self-sensing mode, which may help to provide a cost-efficient design of the measuring probe due to its simplicity.

In some embodiments, the actuator may comprise a piezoelectric material having a coercitive filed of about 10 kV/cm or more. In some embodiments, the actuator element may comprise and/or consist of a piezoelectric washer. The elastic mode of oscillation of the body of the measuring probe according to the present invention may transform oscillations provided by the piezoelectric washer to oscillations having an amplitude which is desirable for scanning microscopy. Hence, the present invention may allow the use of a piezoelectric washer in a measuring probe of a scanning microscope.

In a method of operating a measuring instrument such as a scanning microscope according to the present invention, wherein the scanning microscope comprises a measuring probe as described above and wherein the actuator element comprises or consists of a piezoelectric actuator element having a first and a second electrical connection, a sensor output signal may be created on the basis of a current flow through the first and the second electrode of the piezoelectric actuator element. Simultaneously, an alternating voltage may be applied between the first electrode and the second electrode.

By applying the alternating voltage between the electrodes, the elastic mode of oscillation can be excited. Thus, the measurement probe according to the present invention may be used in a self-sensing mode, wherein the piezoelectric element is used both for actuation and for creating the sensor signal simultaneously. Hence, the complexity of the measuring probe and the number of electrical connections to the measuring probe may be reduced.

Embodiments of the present invention will be described with reference to the enclosed figures, wherein

Fig. 1 shows a schematic perspective view of a measuring probe in a scanning microscope according to the state of the art;

Fig. 2a shows a schematic cross-sectional view of a microscope comprising a measuring probe according to the present invention;

Fig. 2b shows an enlarged cross-sectional view of a portion of the microscope shown in Fig. 2a;

Fig. 3a shows a schematic cross-sectional view of a measuring probe according to an embodiment of the present invention;

Fig. 3b shows an equivalent diagram of the measuring probe shown in Fig. 3a;

Fig. 3c shows a diagram illustrating oscillations of the measuring probe shown in Fig. 3a;

Fig. 4a shows a schematic cross-sectional view of a measuring probe according to another embodiment of the present invention;

Fig. 4b shows a schematic explosive view of the measuring probe shown in Fig. 4a;

Fig. 4c shows an equivalent diagram of the measuring probe shown in Figs. 4a and 4b;

Fig. 4d shows a diagram illustrating oscillations of the measuring probe shown in Figs. 4a and 4b; and

Fig. 5 shows a schematic cross-sectional view of a measuring probe according to yet another embodiment of the present invention.

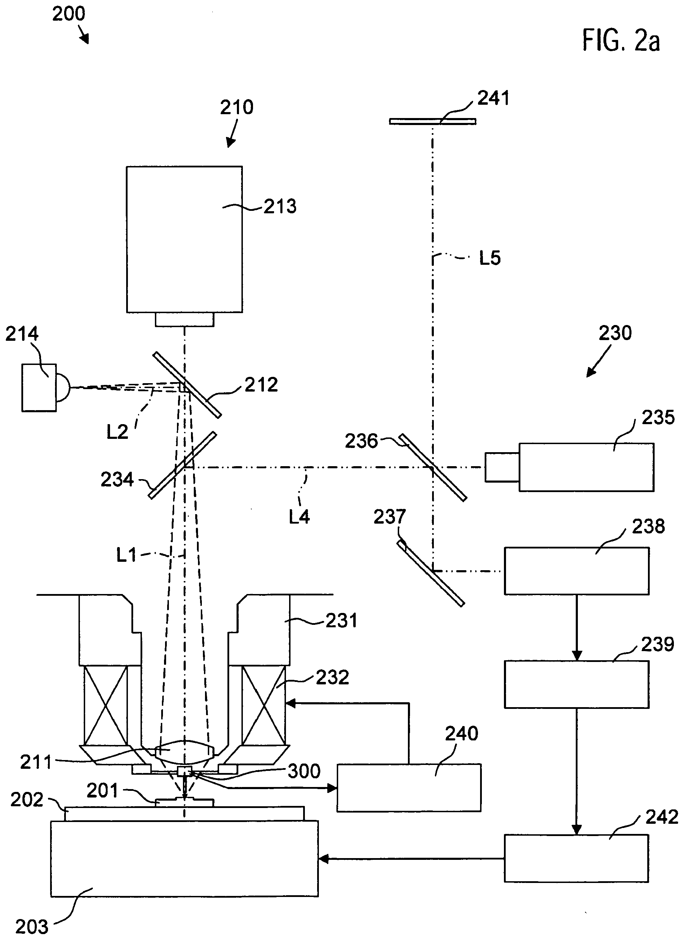

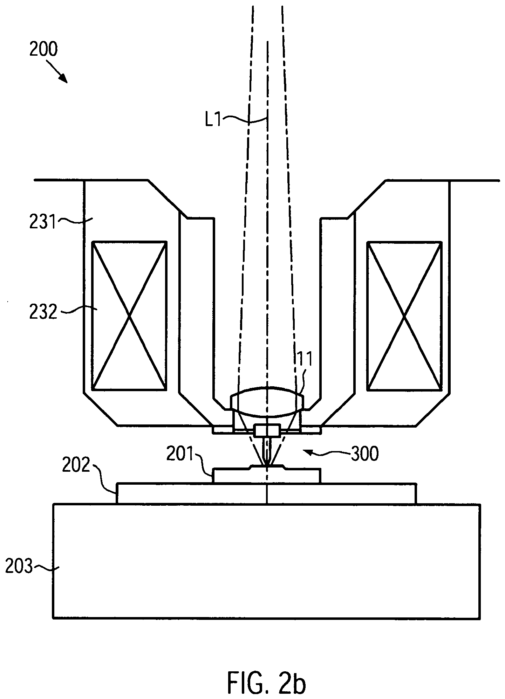

Fig. 2a shows a schematic cross-sectional view of a microscope 200 comprising a measuring probe 300 according to the present invention. The measuring probe 300 may be employed for measurements using techniques of scanning microscopy. Additionally, the microscope 200 may allow an investigation of an object by means of techniques of optical far field microscopy, as will be explained in more detail below. An enlarged cross-sectional view of a portion of the microscope 200 is shown in Fig. 2b.

The microscope 200 comprises a table 202 on which an object 201 which is to be investigated by the microscope 200, for example a workpiece, can be mounted. The microscope 200 further comprises a relative movement unit 203 which is configured to move the table 202.

In some embodiments, the relative movement unit 203 can be configured to move the table 202 in two substantially orthogonal horizontal directions and a vertical direction substantially orthogonal to the horizontal directions. Thus, three-dimensional motions of the table 202 and the object 201 provided thereon can be performed.

Additionally, the microscope 200 may comprise an optical observation unit 210 comprising an objective lens 211, a partially transmissive mirror 212 arranged at an optical axis L1 of the objective lens 211, and an image acquisition unit 213. In some embodiments, the image acquisition unit 213 may comprise a camera, for example a CCD camera of a type known to persons skilled in the art, or a camera comprising a photographic film. In other embodiments, an ocular may be provided instead of the camera 213 for visual inspection of the object 201.

The optical observation unit 210 may further comprise a light source 214 arranged on an optical axis L2, which can be substantially orthogonal to the optical axis L1. Light emitted by the light source 214 can be directed along the optical axis L2 towards the partially transmissive mirror 212. The arrangement of the light source 214, the partially transmissive mirror 212 and the objective lens 211 can be adapted such that a portion of the object 201 is illuminated by light from the light source 214 through the objective lens 211. The objective lens 211 may provide an image of the object 201 to the image acquisition unit 213. Thus, an optical far field image of the object 201 may be obtained.

The microscope 200 may further comprise a holder 231, wherein the objective lens 211 is connected to the holder 231. Additionally, the measuring probe 300 may be connected to the holder 231, as will be described in more detail below. An actuator 232, which may, for example, comprise a piezoelectric actuator may be adapted to move the objective lens 211 and the measuring probe 300 in the vertical direction. Thus, a distance between the object 201 on the one hand and the measuring probe 300 and the objective lens 211 on the other hand may be varied by operation of the actuator 232.

Additionally, the microscope 200 may comprise an interferometer 230 for measuring a position of a portion of the measuring probe 300 along the vertical direction. The interferometer 230 may comprise a light source 235 adapted to emit light along an optical axis L4, which can be substantially perpendicular to the optical axis L1 of the objective lens, and a partially transmissive mirror 234 adapted to reflect a portion of the light emitted by the light source 235 into a direction along the optical axis L1. In some embodiments, the light source 235 may comprise a laser of a type known to persons skilled in the art, for example a semiconductor laser or a gas laser.

The interferometer 230 may further comprise a partially transmissive mirror 236 which is arranged on the optical axis L4 between the light source 235 and the partially transmissive mirror 234. A portion of the light emitted by the light source 235 may be reflected by the partially transmissive mirror 236 along an optical axis L5 which can be substantially perpendicular to the optical axis L4. A mirror 241 may be provided along the optical axis L5, and can be arranged such that light propagating along the optical axis L5 is reflected back towards the partially transmissive mirror 236.

A portion of the light reflected by the mirror 241 may be transmitted through the partially transmissive mirror 236, and may be reflected to a light detector 238 by a further mirror 237. The light detector 238 may comprise a photodiode or a photomultiplier, or any other type of light detector known to persons skilled in the art.

The portion of the light from the light source 235 which is transmitted through the partially reflective mirror 236 and reflected by the partially transmissive mirror 234 may impinge on a portion of the measuring probe 300 after transmission through the objective lens 211 and may be reflected therefrom, as will be explained in more detail below. The light reflected from the measuring probe 300 may propagate back along the axis L1 and may, after reflection at the partially transmissive mirrors 234, 236 and the mirror 237, be directed towards the light detector 238.

The portion of the light from the light source 235 reflected at the measuring probe 300 and the portion of the light from the light source 235 reflected at the mirror 241 may interfere with each other. A phase difference between the portions of the light may depend on the position of the portion of the measuring probe 300 at which the light is reflected. Hence, depending on the position of the portion of the measuring probe 300 at which the light is reflected, the portions of the light may interfere constructively, such that a relatively high light intensity is obtained at the light detector 238, or may interfere destructively, such that a relatively low light intensity is obtained at the light detector 238. Thus, the light intensity measured by the light detector 238 may be representative of the position of the measuring probe 300.

The microscope 200 may further comprise a demodulator 239 for demodulating an output signal from the light detector 239 and for generating a signal representative of the position of the measuring probe 300, and a drive controller 242 receiving an output signal from the demodulator

The drive controller 240 may be adapted to control the operation of the relative movement unit 203. Thus, the object 201 may be moved relative to the measuring probe 300 for scanning the surface of the object 201 by means of the measuring probe 300. Additionally, the drive controller 240 may be configured to control the actuator 232 in accordance with a signal from the measuring probe 300. Thus, the surface of the object 201 may be scanned by means of the measuring probe 300 using techniques of scanning microscopy, as will be explained in more detail below.

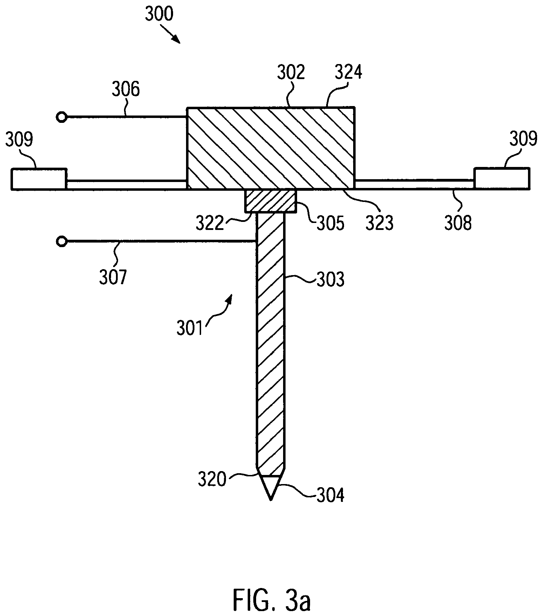

Fig. 3a shows a schematic cross-sectional view of the measuring probe 300 according to an embodiment of the present invention.

The measuring probe 300 comprises a body 301. The body 301 comprises a stylus 303 and a countermass 302. In some embodiments, the stylus 303 may have the shape of a solid cylinder. A measuring tip 304 is provided at a first end 320 of the stylus 303. A actuator element 305 is provided between a second end 322 of the stylus 303 and a bottom surface 323 of the countermass 302. The measuring probe 300 may further comprise a support element 308 for connecting the measuring probe 300 to other portions of the microscope 200, for example to a retaining ring 309 connected to the holder 231. In some embodiments, the stylus 303 can be manufactured from a piece of wire.

In some embodiments, the actuator element 305 can comprise a piezoelectric element connecting the second end 322 of the stylus 303 to the bottom surface 232 of the countermass 302. The stylus 303 and the countermass 302 may be formed from an electrically conductive material, for example a metal such as aluminium, brass, Ni36, stainless steel or similar. A first electrical connection 307 which may, for example, be provided in form of a wire which is soldered or welded to the stylus 303 may provide an electrical connection to the stylus 303. A second electrical connection 306 which may, for example, comprise a wire welded or soldered to the countermass, may provide an electrical connection to the countermass 302.

The first electrical connection 307 and the second electrical connection 306 may be connected to a power source adapted to apply a voltage between the first electrical connection 307 and the second electrical connection 306. Thus, an electric voltage may be applied between the second end 322 of the stylus 303 and the bottom surface 323 of the countermass. The electric voltage may create an electric field in the piezoelectric element of the actuator element 305, such that the actuator element 305 exhibits a force between the second end 322 of the stylus 303 and the bottom surface 323 of the countermass 302.

In one embodiment, the piezoelectric element of the actuator element 305 may comprise a hard piezoelectric material. Hard piezoelectric materials may have a coercitive field being significantly greater than an electric field strength occurring in the piezoelectric material during the operation of the actuator element 305, such that piezo-electric domains in the piezoelectric material do not significantly change their grade of polarization in the range of the mechanic and electric operation conditions of the actuator element 305.

In some embodiments, when simple and cost-efficient operation of the measuring probe 300 is intended, the actuator element 305 may be used for excitation of the mechanical vibration by connecting it to an alternating voltage source using the electrical wires 306 and 307, and may simultaneously be used for sensing the mechanical vibration by measuring the current flow through one of the wires 306 or 307. In some embodiments, an electrical representative of the mechanical vibration, with well scaled amplitude and matching phase, may be computed from the current signal. Thus, the measuring probe 300 may be operated in a self-sensing mode.

In some embodiments, the piezoelectric material may comprise lead zirconate titanate (PZT). Lead zirconate titanate is a piezoelectric material well known to persons skilled in the art. As persons skilled in the art know, lead zirconate titanate may have very high piezoelectric coupling factors, and in addition, hard lead zirconate titanate may have a high immunity of the grade of piezo-electric polarization against mechanical stresses and electrical fields.

In some embodiments, the piezoelectric material may have a coercitive field strength greater than about 10 kV/cm.

The present invention is not restricted to embodiments wherein the actuator element 305 comprises a piezoelectric element. In other embodiments, the actuator element 305 may comprise an electro-magnetic transducer. In one such embodiment, the countermass 302 may comprise a ferromagnetic material, for example iron, and the stylus 303 may comprise a nonferromagnetic material, for example aluminum. Alternatively, the stylus 303 may comprise a ferromagnetic material and the countermass 302 may comprise a nonferromagnetic material. The actuator element 305 may further comprise a coil arranged such that a magnetic field created by an electric current flowing through the coil may interact with the ferromagnetic countermass 302 or the ferromagnetic stylus 303, respectively. In one embodiment, the coil may be attached to a portion of the holder 231. If an electric current is flown through the coil, the magnetic field may interact with the ferromagnetic material, such that a force is exhibited on one of the countermass 302 and the stylus 303. A significantly lower force, or substantially no force at all, is exhibited by the magnetic field to the other of the countermass 302 and the stylus 303. Thus, a force is exhibited between the countermass 302 and the stylus 303. A strength of the force may be controlled by varying the amperage of the current flowing through the coil.

The tip 304 may be adapted for scanning the surface of the object 201 by means of techniques of scanning microscopy such as scanning force microscopy, scanning tunneling microscopy or optical near field microscopy. The configuration of the tip 304 may be adapted to the desired type of scanning microscopy. In one embodiment wherein the measuring probe 304 is adapted for scanning force microscopy, the tip 304 may comprise a diamond tip which is glued to the first end 320 of the stylus 303. In other embodiments, the tip 304 may comprise a tip of a different type.

The support element 308 is attached to the countermass 302. In some embodiments, the support element 308 may be attached to a portion of a side surface of the countermass 302 adjacent an edge between the side surface and the bottom surface 323, for example by gluing. In other embodiments, the support element 308 may be attached to the bottom surface 323 of the countermass 302.

In some embodiments, the support element 308 may comprise a plurality of bars connected between the countermass 302 and the retaining ring 309. In such embodiments, the optical observation unit 210 may view the surface of the object 201 through gaps between the bars. In other embodiments, the support element 308 may comprise a disk-shaped member having a central opening, wherein a circumference of the central opening of the disk-shaped member may be connected to the countermass 302 and an outer circumference of the disk-shaped member may be connected to the retaining ring 309. The disk-shaped member may further comprise a plurality of openings provided between the countermass 302 and the retaining ring 309. In such embodiments, the optical observation unit 210 may view the object 201 through these openings.

The countermass 302, the stylus 303 and/or the actuator element 305 may have a rotationally symmetrical configuration, and a diameter of the countermass 302, the stylus 303 and the actuator element 305 may be smaller than the aperture of the objective lens 211, such that the measuring probe 300 does not significantly obstruct the entrance pupil of the optical observation unit 210. The stylus 303 and/or the countermass 302 may be monolithic components.

The support element 308 comprises an elastic material such that the countermass 302 may move relative to the retaining ring 309. Additionally, the material of the support element 308 may have damping properties. In some embodiments, the support element 308 may comprise a plastic material, for example polyethylene (PE) or polyvinyl chloride (PVC).

If the actuator element 305 is operated to exhibit a force between the second end 322 of the stylus 303 and the bottom surface of the countermass 302, inertial forces of portions of the body 301 and/or elastic forces in portions of the body 301 may create a counterforce. The inertial forces and the elastic forces may lead to an elastic oscillation of the body 301, wherein a frequency of the oscillation as well as a displacement of portions of the body 301 by the oscillation may be determined by the shape of and mass distribution in the measuring probe 300, as well as by the elastic properties of the material or materials of the body 301.

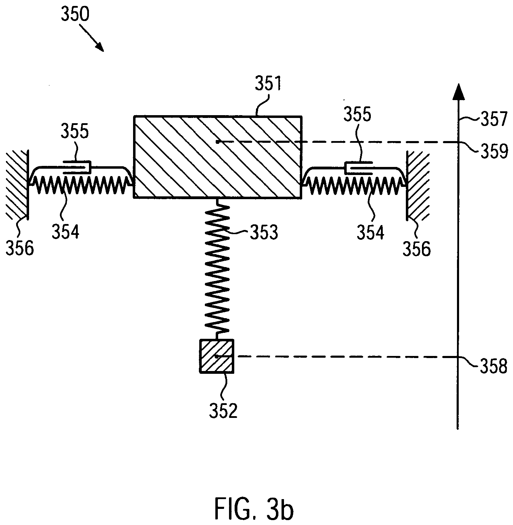

The oscillation of the measuring probe will be described in more detail with reference to Fig. 3b, which shows a schematic equivalent diagram 350 of the measuring probe 300 shown in Fig. 3a. The equivalent diagram 350 is illustrative for elastic modes of oscillation of the measuring probe 300.

In Fig. 3b, reference numeral 351 denotes a first mass, which is representative of inertial forces occurring due to the motion of the countermass 302. Reference numeral 352 denotes a second mass, which is coupled to the first mass 351 by a spring 353. The second mass 352 is representative of inertial forces occurring due to the motion of the stylus 303 or portions thereof, and the spring 353 is representative of an elasticity of the stylus 303. Due to the elasticity of the stylus 303, the stylus 303 may oscillate in a longitudinal direction of the stylus, such that a distance between the first end 320 and the second end 322 is varied in a periodic manner. A spring constant of the spring 353 and the second mass 352 may represent elastic forces and inertial forces, respectively, occurring in the stylus 303 during the oscillation of the stylus 303.

As persons skilled in the art will appreciate, the first mass 351 and the second mass 352 are equivalent masses representative of inertial forces occurring in the measuring probe 300. In particular, the second mass 352 may be smaller than the actual mass of the stylus 303, since portions of the stylus 303 in the vicinity of the second end 322 may move at a lower speed than portions of the stylus 303 in the vicinity of the tip 320, thus exhibiting smaller inertial forces than the portions of the stylus 303 in the vicinity of the tip 320. Therefore, the portions of the stylus 303 in the vicinity of the second end 322 may enter into the second mass 352 with a weighting factor smaller than one.

For the purposes of the equivalent diagram 350, the first mass 351 may be set substantially equal to the mass of the countermass 302, since the elastic deformation of the countermass 302 may be small compared to the elastic deformation of the stylus 303.

An elasticity of the support element 308 may be represented by springs 354, and damping properties of the support element 308 may be represented by dampers 355. Since the retaining ring 309 may be connected to the holder 231 of the microscope 231, the mass of which may be much greater than the mass of the measuring probe 300, in the equivalent diagram 350, the retaining ring 309 may be represented by a rigid wall 356 which does not allow a motion of ends of the spring 354 and the damper 355 connected to the rigid wall 356 relative to the rigid wall 356.

Furthermore, in the equivalent diagram of Fig. 3b, the first mass 351 and the second mass 352 may be regarded as point masses, the springs 353, 354 may be regarded as ideal springs, and the damper 355 may be regarded as an ideal damper providing a decelerating force which is proportional to a velocity of the first mass 351.

As persons skilled in the art will understand, the equivalent diagram 350 may provide a simplification of features of the measuring probe 300. Nevertheless, the equivalent diagram may be useful for understanding elastic oscillations of the measuring probe 300.

In Fig. 3b, reference numeral 357 denotes a coordinate axis denoting positions of the first mass 351 and the second mass 352 in the longitudinal direction of the stylus 303, and reference numerals 359 and 358, respectively, denote the positions of the first mass 351 and the second mass 352, respectively.

If one or both of the first mass 351 and the second mass 352 is moved away from its rest position, the spring 353 and, optionally, the spring 354 will exhibit a force on the first mass 351 and the second mass 352. A direction of the force will be such that the masses 351, 352 are drawn back towards their rest positions. The force accelerates the masses 351, 352, such that the masses 351, 352 obtain a velocity and move beyond their rest position, until the springs 353, 354 force them back. Thus, an oscillatory motion of the masses 351, 352 is obtained. The dampers 355 may damp the oscillatory motion of the masses 351, 352 such that an amplitude of the oscillatory motion of the masses 351, 352 is reduced in the course of time.

Similarly, in the measuring probe 300, the measuring tip 304 of the stylus 303 and the countermass 302 may oscillate relative to each other, the damping properties of the support element 308 leading to a decay of the amplitude of oscillation. The stylus 303 may also have damping properties. Since the damping provided by the stylus 303 may be weak compared to the damping provided by the support element 308, for purposes of the equivalent diagram 350, the damping provided by the stylus 303 may be neglected. The damping provided by the support element 308 and/or the stylus 303 may be characterized by the Q-factor of the elastic oscillation of the measuring probe 300. As persons skilled in the art know, the Q-factor of a damped mechanical or electrical oscillator is representative of a ratio between the vibration amplitude and the loss of vibration amplitude per cycle.

In the operation of the measuring probe 300, the damping provided by the supporting element 308 as well as the damping provided by the stylus 303 may be compensated by an activation of the actuator element 305 in a quasi-stationary condition. To this end, an alternating voltage signal having a frequency being substantially equal to the frequency of the elastic mode of oscillation of the body of the measuring probe 300 may be supplied to the actuator element 305. In some embodiments, the alternating voltage signal can be created by means of an external function generator.

In some embodiments, the mass of the countermass 302 may be large compared to the mass of the stylus 303 and the mass of the stylus 303 may be large compared to the mass of the tip 304. In such embodiments, the frequency of oscillation of the body of the measuring probe 300 may approximately be calculated in accordance with the following equation:

$$f = \sqrt{E/\rho}\,/4l$$

wherein f is the frequency of oscillation, p and E, respectively, are the specific density and Young's modulus, respectively, of the material of the stylus 303, and I is the length of the stylus 303. In this equation, the stylus 303 is approximated by a cylindrical rod which is fixed at one end to the actuator 305 and the countermass 302, motions of which are neglected, and the influence of the tip 304 on the oscillation of the stylus 303 is also neglected. In other embodiments, the frequency of oscillation of the body of the measuring probe 303 may be calculated by means of finite element methods known to persons skilled in the art. In still further embodiments, the frequency of the elastic mode of oscillation may be determined experimentally.

In one embodiment, wherein the actuator element 305 comprises a piezoelectric element, a sensor output signal of the measuring probe 300 may be created on the basis of an electric current flowing through the piezoelectric element and through the first electrical connection 307 and the second electrical connection 308.

Due to the piezoelectricity of the piezoelectric element, and since the alternating voltage source may have a negligibly low impedance, at least a portion of the current flowing through the electrical connections 307, 308 may be representative of a deformation of the piezoelectric element in the longitudinal direction of the stylus 303 The deformation of the piezoelectric element, in turn, may depend on forces acting on the piezoelectric element. Hence, at least a portion of the current flowing through the electrical connections 307, 308 may be representative of forces acting between the stylus 303 and the countermass 302. Thus, the actuator element 305 may be employed both for creating the sensor output signal and for exhibiting a force between the stylus 303 and the countermass 302. Hence, the actuator element 305 may be used as a sensor-actuator element, and the measuring probe 300 may be operated in self-sensing mode.

In some embodiments, a compensation of bind currents caused by a capacity of the piezoelectric element in the actuator element 305 and/or other blind currents may be performed, for example by means of methods of real time computation. Thus, portions of the current flowing through the electrical connections 306, 307 which are caused by mechanical vibrations of the measuring probe 300 may be isolated from contributions of the blind currents.

As an additional feature, a feedback signal may be created from the sensor output signal on the basis of the current through the electrical connections 307, 306. This signal, shifted to have appropriately matching phase and amplitude, may be added to the signal of the external voltage source. In this configuration, the feedback signal will influence the losses per cycle of the measuring probe 300, and the measuring probe can be operated under the condition of artificially generated, different quality factors, when needed. In some embodiments of the present invention, the feedback signal may be generated in computation sub-units of the drive controller 240. The technique to positively feedback fractions of the sensor output signal to its input is well known as Q control to persons skilled in the art.

The present invention is not restricted to embodiments wherein the sensor output signal is created on the basis of the current flow through the electrical connections 307, 306. In other embodiments, the feedback signal may be created on the basis of a sensing element which is distinct from the actuator element 305, which then is used as an actuator only. For example an additional piezoelectric sensing element may be provided in the measuring probe 300, for example in the countermass 302.

The oscillation of the measuring probe 300 may depend on the masses of the countermass 302 and the stylus 303 and, correspondingly, the first mass 351 and the second mass 352.

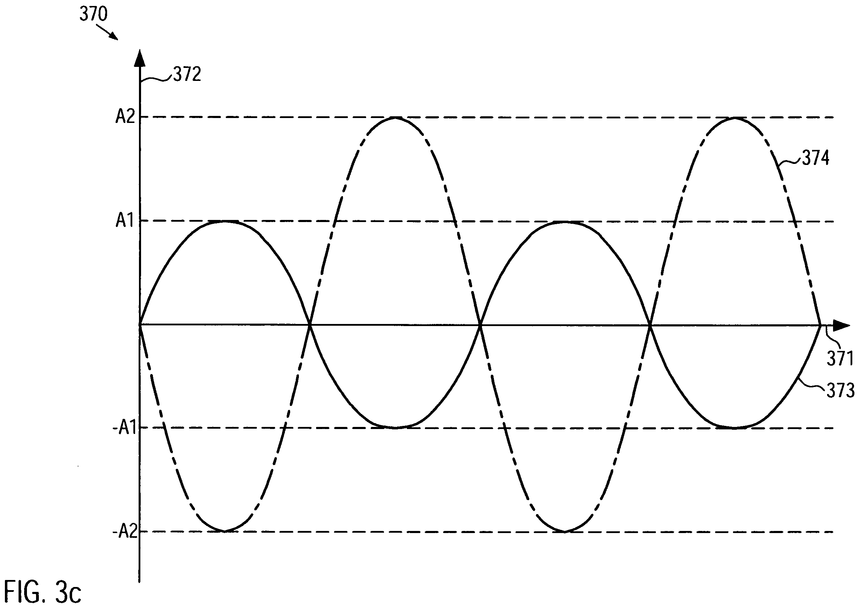

In some embodiments, the mass of the countermass 302 may be greater than the mass of the stylus 303. In the equivalent diagram 350, this may correspond to a first mass 351 being greater than the second mass 352. In the following, the oscillation of the measuring probe 300 in such embodiments will be described with reference to Fig. 3c.

Fig. 3c shows a diagram illustrating oscillations of the measuring probe 300. A first coordinate axis 371 denotes time, and a second coordinate axis 372 denotes positions of the first mass 351 and the second mass 352 relative to their rest positions. A first curve 373 shows the difference between the position of the first mass 351 along the longitudinal direction of the stylus 303 and the rest position of the first mass 351 as a function of time, and a second curve 374 shows the difference between the position of the second mass 352 along the longitudinal direction of the stylus 303 and the rest position of the second mass 352.

In a desired mode of oscillation, the position of the first mass 351 and the second mass 352 along the longitudinal direction may have a substantially sinusoidal dependence on time, wherein the first mass 351 and the second mass 352 move in opposite directions. Hence, when the first mass 351 is deflected towards the objective lens 211, corresponding to positive values of the curve 373, the second mass 352 is deflected towards the object 201, corresponding to negative values of the curve 374. Conversely, when the first mass 351 is deflected towards the object 201, corresponding to negative values of the curve 373, the second mass 352 is deflected towards the objective lens 211, corresponding to positive values of the curve 374. In embodiments wherein the first mass 351 is greater than the second mass 352, an amplitude A1 of the oscillation of the first mass 351 may be greater than an amplitude A2 of the oscillation of the second mass 352, since, in such embodiments, the first mass 351 has a greater inertia than the second mass 351.

In the measuring probe 300, a deflection of the tip 304 in the longitudinal direction of the stylus 303 from its rest position is related to the deflection of the second mass 352 in the equivalent diagram 352, and a deflection of the countermass 302 in the longitudinal direction of the stylus 303 from its rest position is related to the deflection of the first mass 351 in the equivalent diagram 350. Hence, in embodiments wherein the mass of the countermass 302 and the mass of the stylus 303 are selected such that they correspond to a first mass 351 being greater than the second mass 352, in particular in embodiments wherein the mass of the countermass 351 is greater than the mass of the stylus 303, an amplitude of the deflection of the tip 304 relative to its rest position is greater than an amplitude of the deflection of the countermass 302 relative to its rest position.

In the measuring probe 300, the actuator element 305 is arranged such that it exhibits a force between the second end 322 of the stylus 303 and the bottom surface 323 of the countermass 302 when the actuator element 305 is operated. Due to the elasticity of the stylus 303, the amplitude of the displacement of the second end 322 of the stylus 303 relative to the bottom surface 323 of the countermass 302 is smaller than the displacement of the measuring tip 304 relative to the bottom surface of the countermass, and may also be smaller than the displacement of the measuring tip 304 relative to its rest position. Hence, in order to oscillate the measuring tip 304 at a desired amplitude of oscillation, an amplitude of oscillation provided by the actuator element 305 may be smaller than the desired amplitude of oscillation of the measuring tip 304. The actuator element 305, however, may be exposed to inertial forces exhibited by the countermass 302 and the stylus 303, such that the force exhibited on the actuator element 305 may be greater than the force exhibited on the measuring tip 304 during the oscillation of the measuring probe 300.

Thus, the measuring probe 300 may act as a mechanical analogue of a transformer, wherein a small amplitude of oscillation and a relatively large force between the second end 322 of the stylus 303 and the bottom surface 323 of the countermass 302 is transformed to a relatively large amplitude of oscillation and a relatively low force acting on the tip 304.

As detailed above, in some embodiments, the actuator element 305 may be a piezoelectric actuator comprising a hard piezoelectric PZT material having a high mechanical and electrical immunity against any change of the grade of its piezo-electric polarization. It thus combines the advantages of quartz such as high mechanical quality factor and low electronic noise generation with the advantage of PZT of a high piezoelectric coupling factor.

As persons skilled in the art know, piezoelectric materials may provide a relatively large force at a relatively small amplitude of oscillation. The measuring probe 300 allows to transform the oscillations of this type provided by the piezoelectric element to oscillations having a relative large amplitude and a small force of oscillation, which are desirable for the oscillation of the measuring tip 304 in scanning microscopy.

In addition to the mode of oscillation described above, wherein the first mass 351 and the second mass 352 move in opposite directions, the measuring probe 300 may further comprise other modes of oscillation wherein the first mass 351 and the second mass 352 move in the same direction, and wherein inertial forces of the first mass 351 and the second mass 352 are balanced to a large extent by elastic forces exhibited by the springs 354, which are representative of the elasticity of the support element 308. This, however, may entail a relatively large damping by the dampers 355, which are representative of the damping in the support element 308. Hence, modes of oscillation wherein the first mass 351 and the second mass 352 oscillate concurrently may be damped to a relatively large extent, such that they have a relatively small Q-factor.

Conversely, in modes of oscillation wherein the first mass 351 and the second mass 352 move in opposite directions, the first mass 351 to which the springs 354 and the dampers 355 are connected, inertial forces exhibited by the masses 351, 352 may act mostly between the masses 351, 352, such that the springs 354 and the dampers 355 are deformed to a less extent, which entails a smaller damping and a greater Q-factor of such modes of oscillation.

Since the motion of the first mass 351 and the second mass 352 in the equivalent diagram 350 are representative of the motion of the countermass 301 and the measuring tip 304, respectively, in the measuring probe 300, modes of oscillation wherein the countermass 302 and the measuring tip move in opposite directions may have a greater Q-factor than modes of oscillation wherein the measuring tip 304 and the countermass 322 move concurrently. Thus, in embodiments wherein the Q-value is modified artificially using means of Q control as described on top, modes of oscillations wherein the measuring tip 304 and the countermass move concurrently remain far under the critical feedback loop gain of 1, which is when the corresponding mode would start to oscillate with rising amplitude. Only the oscillation mode oscillation in opposite direction is present, is augmented to a near critical value in cases when a very high Q value is necessary. This may help to reduce a mechanical load of the support element 308, since the support element 308 is deformed to a less extent in modes of oscillation wherein the measuring tip 304 and the countermass 302 move in opposite directions.

In the operation of the microscope 200, the optical observation unit 210 may be used to inspect the surface of the object 201 to be investigated. Since the optical observation unit 210 may provide a relatively large field of view, the optical observation unit 210 may be used to establish portions of the object 201 which deserve a more detailed inspection by means of scanning microscopy. Once a portion of the object 201 which is to be inspected by scanning microscopy is identified, the relative movement unit 203 may be operated to position the respective portion of the object 201 below the measuring tip 304. Thereafter, the actuator element 305 may be operated to oscillate the measuring probe 300, and the actuator 232 may be operated to approach the measuring tip 304 to the object 201. If the measuring tip 304 interacts with the object 201, an amplitude and/or phase of the elastic mode of oscillation of the measuring probe 300 may be altered with respect to the signal of the external voltage source.

The table 201 can be operated to move the object 201 relative to the measuring tip 304, and the actuator 232 may be operated to maintain the amplitude and/or phase of the oscillation of the measuring tip 304. Thus, a substantially equal interaction between the measuring tip 304 and the surface of the object 201 may be maintained, and the position of the measuring probe 300 along the optical axis L1, which may be substantially parallel to the longitudinal direction of the stylus 303, may follow the topography of the surface of the object 201. The position of the measuring probe 300 along the direction of the optical axis L1 may be detected by means of the interferometer 230, to measure the topography of the surface of the object 201. Since the mode of oscillation of the measuring probe 300 may have a moderately large Q-factor, the measurement of the topography of the surface of the object 201 may be performed at a relatively high speed.

For this purpose, a mirror portion may be provided on the top surface of the countermass 302. The mirror portion may reflect a portion of the light from the light source 235 reflected by the partially transmissive mirror 234 after passage of the light through the objective lens 211. The reflected light may then interfere with the light reflected from the mirror 241.

In some embodiments, the top surface of the countermass 302 may be polished to form the mirror portion. Additionally or alternatively, a reflective layer which may, for example, comprise aluminum and/or silver may be formed on the top surface 324 of the countermass 302.

The measuring probe 300 may act as a mechanical transformer, wherein a relatively small force acting on the tip 304 is transformed to a greater force at the location of the actuator element 305 and the countermass 302. Hence, the measuring probe 300 may be influenced by a relatively weak interaction between the measuring tip 304 and the object 201, which may help to increase the sensitivity of the measurement.

Since the amplitude of oscillation of the countermass 302 may be smaller than the amplitude of oscillation of the tip 304, the amplitude of oscillation of the countermass 302 which may reflect the light from the light source 235 may be small compared to the wavelength of the light if the amplitude of oscillation of the tip 304 is adapted for optimal performance of scanning microscopy. Hence, the interferometric measurement of the height of the measuring probe 300 may be influenced by the oscillation of the measuring probe 304 to a relatively small extent, which may help to improve a precision of the measurement.

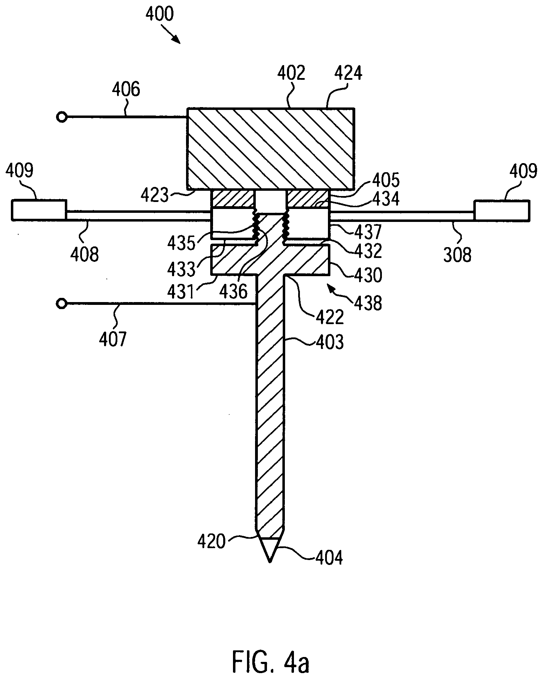

Further embodiments of the present invention will be described with reference to Figs. 4a to 4d.

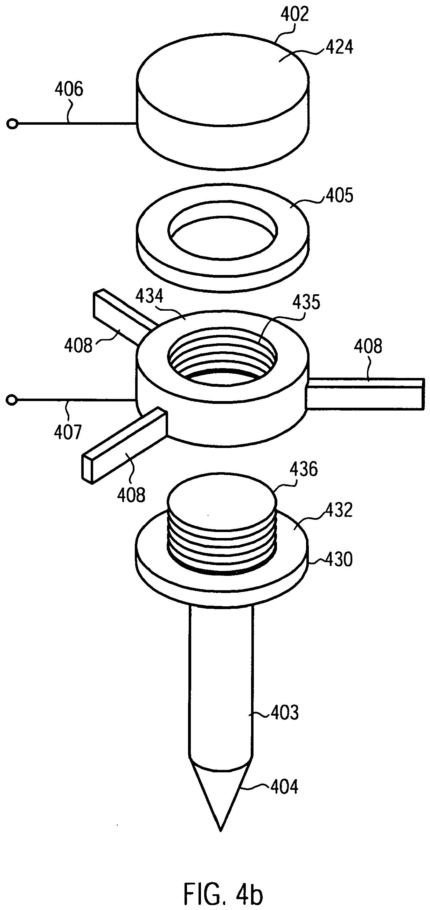

Fig. 4a shows a schematic cross-sectional view of a measuring probe 400, which may be provided in the microscope 200 instead of the measuring probe 300 described above. A schematic explosive view of the measuring probe 400 is shown in Fig. 4b.

The measuring probe 400 comprises a stylus 403. In some embodiments, the stylus 403 may have the shape of a solid cylinder. A measuring tip 404 is connected to a first end 420 of the stylus 403. A second end 422 of the stylus 403 is connected to a bottom surface 431 of a screw 430. At a top surface 432 of the screw 430 opposite the bottom surface 431, a threaded portion 436 is provided. The threaded portion 436 is screwable to a nut 437 which comprises a thread 435 mating with the threaded portion 436 of the screw 430. If the screw 430 is screwed into the nut 437, the top surface 432 of the screw 430 faces a bottom surface 433 of the nut 437. In some embodiments, the screw 430 may comprise a standard, small size screw, for example a M1x1 screw with a cylinder head. Similar to the stylus 303 described above, the stylus 403 can be assembled from a piece of wire.

A first countermass 402 is provided above a top surface 434 of the nut 437, which is opposite the bottom surface 433 of the nut 437. An actuator element 405 is provided between the top surface 434 of the nut 437 and a bottom surface 423 of the first countermass 424. Similar to the measuring probe 300 described above with reference to Figs. 3a to 3c, a top surface 424 of the first countermass may comprise a mirror portion, which may be used for an interferometric measurement of the position of the first countermass 402 along a longitudinal direction of the stylus 403.

The threaded portion 436 of the screw 430 and the thread 435 of the nut 437 may provide a connection between the screw 430 and the nut 437 which substantially prevents a motion of the screw 430 relative to the nut 437. Hence, the screw 430 and the nut 437 together provide a second countermass 438 arranged between the second end 422 of the stylus 403 and the actuator element 405.

The stylus 403, the screw 430 and the nut 437 together form a body of the measuring probe 400.

The stylus 403 and the measuring tip 404 may have features similar to those of the stylus 303 and the measuring tip 304 described above with reference to Figs. 3a to 3c. While, in some embodiments of the present invention, the stylus 403 may be connected to the bottom surface 431 of the screw 430 by known assembling techniques such as soldering or welding, for example spot welding, in other embodiments, the stylus 430 and the screw 430 may be integral. In such embodiments, the stylus 403 and the screw 430 may be machined from a monolithic blank material.

The measuring probe 400 is connected to a retaining ring 409 which is attachable to the holder 231 of the microscope by means of a support element 408. Thus, the measuring probe 400 may be provided in front of the objective lens 211 of the optical observation unit 210. The support element 408 has features similar to those of the support element 308 described above with reference to Figs. 3a to 3c.

The actuator element 405 may comprise a piezoelectric element. In some embodiments of the present invention, the actuator element 405 may comprise a piezoelectric element having a ring-shaped configuration with a central opening located above the threaded portion 436 of the screw 430. In some of these embodiments, the actuator element 405 may comprise a piezoelectric washer of a type known to persons skilled in the art. Similar to the piezoelectric element 305 of the measuring probe 300 described above with reference to Figs. 3a to 3c, the actuator element 405 may comprise a hard piezoelectric material having a high immunity against electrically or mechanically induced changes of the grade of piezo-electric polarization, and a high piezo-electric coupling factor.

The measuring probe 400 may further comprise a first electrical connection 407 connected to the nut 437 and a second electrical connection 406 connected to the first countermass 402. By applying an electric voltage between the first electrical connection 407 and the second electrical connection 406, an electric voltage may be applied between the top surface 434 of the nut 437 and the bottom surface 423 of the first countermass 402. Thus, the piezoelectric element of the actuator element 405 may be exposed to an electric field for creation of a force acting between the first countermass 402 and the second countermass 438.

The measuring probe 400 may have an elastic mode of oscillation wherein an amplitude of a displacement of the bottom surface 423 of the first countermass 402 relative to the top surface 434 of the nut 437 is smaller than an amplitude of a displacement of the tip 404 relative to the rest position of the measuring tip 404. Thus, similar to the measuring probe 300 described above with reference to Figs. 3a to 3c, the measuring probe 400 may act as a mechanical transformer for increasing the amplitude of oscillations provided by the actuator interface 405.

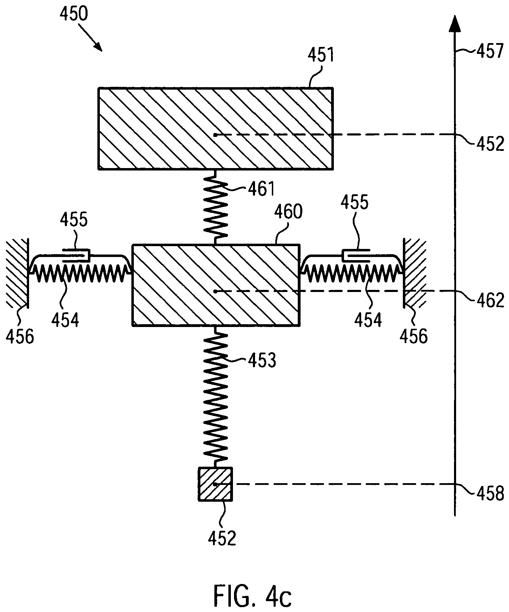

Modes of oscillation of the measuring probe 400 will be described with reference to Fig. 4c, which shows a schematic equivalent diagram 450 of the measuring probe 400.

In the equivalent diagram 450, reference numeral 451 denotes a first mass which is representative of inertial forces occurring in the first countermass 402. A second mass 460 is representative of inertial forces occurring in the second countermass 438 provided by the screw 430 and the nut 437, and a third mass 452 is representative of inertial forces occurring in the stylus 403.

A first spring 461 is representative of elastic forces acting between the first countermass 402 and the second countermass 438. Such elastic forces may, in particular, be caused by the elasticity of the nut 437 and the actuator element 405. A second spring 453 is representative of elastic forces occurring in the stylus 403, similar to the spring 353 in the equivalent diagram 350 shown in Fig. 3b.

Further springs 454 are representative of elastic forces in the support element 408, and dampers 455 are representative of damping properties of the support element 408, similar to the springs 354 and dampers 355 shown in Fig. 3b. The support ring 409, being fixed to the holder 231 of the microscope 200, may be represented by a fixed wall 456.

Similar to the masses 351, 352 in the equivalent diagram 350 shown in Fig. 3b, the first mass 451, the second mass 460 and the third mass 452 are effective masses, and may be regarded as point masses for purposes of understanding the oscillations of the measuring probe 400. The springs 461, 453, 454 may be regarded as ideal springs, and the dampers 455 may be regarded as ideal dampers providing a force being proportional to the velocity of the second mass 460 relative to the wall 456 and acting in a direction opposite the direction of motion of the second mass 460.

Similar to the measuring probe 300 described above, the damping of the motion of the components of the measuring probe 400 may be compensated by the actuator element 405, when, after some time for building up of the externally excited vibration has passed, the resonance is quasi stationary. In some embodiments, the actuator element 405 may not be operated in a self-sensing mode, wherein the reading of the sensor signal is performed using other means for transforming the mechanical vibration of the measuring probe 400 into an electronic voltage signal. The actuator element 405 then is exclusively used as an actuator. For instance, in some embodiments, the sensor output signal may be created on the basis of a signal provided by an additional sensor element (not shown) in the measuring probe 400 which is distinct from the actuator element 405. Thus, a substantially periodic motion of the masses 451, 460, 452 may be obtained.

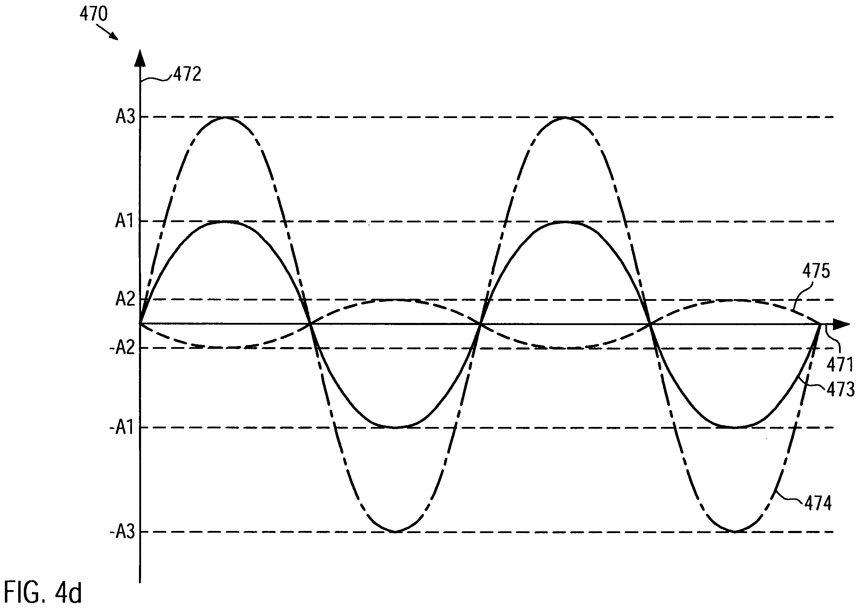

The motion of the masses 451, 460, 452 in one mode of oscillation of the measuring probe 400 is illustrated in Fig. 4d. Fig. 4d shows a diagram 470 comprising a first coordinate axis 471 which denotes time, and a second coordinate axis 471 which denotes deviations of positions of the masses 451, 460, 452 from their rest positions along the longitudinal direction of the stylus 403.

In Fig. 4c, the longitudinal direction of the stylus 403 is represented by an arrow 457. Reference numeral 459 denotes a position of the first mass 451 along the longitudinal direction 457. Reference numerals 462, 458 denote positions of the second mass 460 and the third mass 452, respectively.

In Fig. 4d, a first curve 473 illustrates the time dependence of the deviation between the position 459 of the first mass 451 and the rest position of the first mass 451. A second curve 475 illustrates the time dependence of the deviation between the position of the second mass 460 and the rest position of the second mass 460. A third curve 473 illustrates the time dependence of the deviation between the position of the third mass 452 and the rest position of the third mass 452.

In the mode of oscillation shown in Fig. 4d, which may be a desired mode of oscillation of the measuring probe 400, the first mass 451 and the third mass 452 move in the same direction, whereas the second mass 460 moves in a direction opposite the direction of motion of the first mass 451 and the third mass.

Since the first mass 451 is representative of the first countermass 402, the second mass 460 is representative of the second countermass 438 and the third mass 452 may be representative of the front portion of the stylus 403 to which the tip 404 is attached, the first countermass 402 and the tip 404 may move in the same direction in the desired mode of oscillation of the measuring probe 400, and the second countermass 438 may move in the counter direction.

The positions of the masses 451, 460, 451 may have a sinusoidal dependence on time, wherein an amplitude A1 of the displacement of the first mass 451, an amplitude A2 of the displacement of the second mass 460 and an amplitude A3 of the displacement of the third mass 452 depend on the first mass 451, the second mass 460 and the third mass 452, which are related to the mass of the first countermass 402, the mass of the second countermass 430 and the mass of the stylus 403, respectively. Hence, the amplitudes A1, A2, A3 and, correspondingly, the amplitudes of the displacement of the measuring tip 404, the first countermass 402 and the second countermass 438 may be controlled by selecting appropriate masses of the components of the measuring probe 400.

In the mode of oscillation illustrated in Fig. 4d, the amplitude A2 of the oscillation of the second mass 460 is relatively small compared to the amplitude A3. Since the amount of energy dissipated in the dampers 455, which are connected to the second mass 460, and which represent the damping properties of the support member 408, depends on the speed of the second mass 460, the illustrated mode of oscillation may be damped to a relatively small extent, such that a moderately large Q-factor of the desired mode of oscillation can be obtained.

In other modes of oscillation of the measuring probe 400, the speed of the movement of the second mass 460 may be greater, such that a relatively low Q-factor is obtained for the other modes of oscillation. Thus, undesirable modes of oscillation may be suppressed.

The masses of the first countermass 402, the second countermass 438 and the stylus 403 may further be adapted such that the amplitude of the displacement of the first countermass 402 relative to its rest position is smaller than the amplitude of the displacement of the measuring tip 404 relative to its rest position. This may help to obtain more precise measurements of the position of the first countermass 402 along the stylus 403 by means of interferometry. Additionally, the amplitude of the displacement of the measuring tip 404 relative to its rest position may be greater than the amplitude of the displacement of the top surface 434 of the nut 437 relative to the bottom surface 423 of the first countermass. Thus, the amplitude of oscillation of the measuring tip 404 may be greater than the amplitude of oscillation provided by the actuator element 405.

In some embodiments of the present invention, the mass of the first countermass 402 may be greater than the mass of the stylus 403. Additionally, the mass of the second countermass 437, which may be given by the sum of the mass of the screw 430 and the mass of the nut 437, may be greater than the mass of the stylus 403 and/or the sum of the mass of the first countermass 402 and the mass of the second countermass 437 may be greater than the mass of the stylus 403.

In some embodiments of the present invention, the mass of the first countermass 402 can be in the range of 50 - 100 mg, the sum of the masses of the screw 430 and the nut 437 can be in the range of 30 - 60 mg, and the total mass of the stylus 403 can be in the range of 0.2 - 0.4 mg. Thus, the difference in mass between the vibrating portion of the stylus 403 and the countermasses 402, 438 may range between 2 and 3 orders of magnitude. The amount of motion of the bottom end 420 of the stylus 403 may, in turn, be about 2 to 3 orders of magnitude greater than the amount of motion of the top mass. Typical dimensions may lie in the range of about 3 mm diameter x 1 mm height for the first countermass 402 and about 2 mm diameter x 2 mm height for the screw 430 and the nut 437 forming the second countermass 438. The diameter of the stylus 403 may be in the range between 0.1 and 0.2 mm, its length in the range between 2 mm and 5 mm. In the assembly of the measuring probe 400, techniques for providing metallic links such as soldering and welding techniques can be used. The piezo-electric element in the actuator 405 may be a washer-shaped or disc-shaped, single layer, hard piezo-electric material.

In the measuring probe 400, the connection between the screw 430 and the nut 437 may be released by unfastening the connection between the threaded portion 436 of the screw 430 and the thread 435 of the nut 437. Thus, the stylus 403 and the measuring tip 404 may be exchanged in case of a deterioration of the stylus 403 and/or the measuring tip 404.

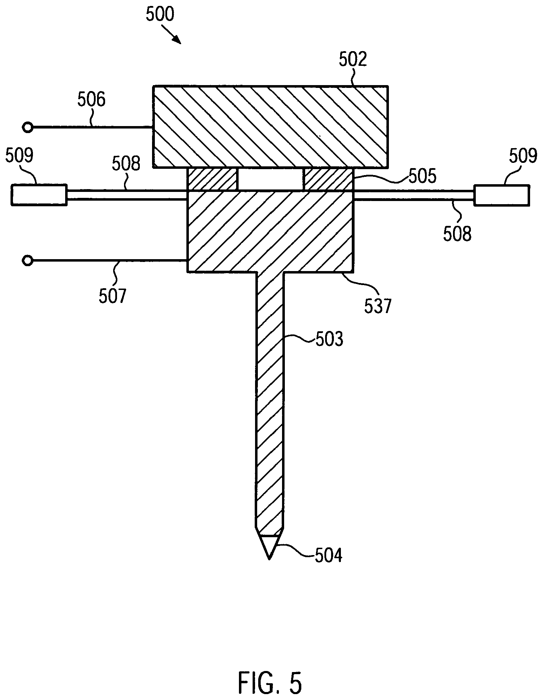

Fig. 5 shows a measuring probe 500 according to a further embodiment of the present invention. The measuring probe 500 may be provided in the microscope 200 instead of the measuring probe 300 or the measuring probe 400 described above.

The measuring probe 500 comprises a measuring tip 504 connected to a stylus 503. In some embodiments, the stylus 503 may have the shape of a solid cylinder. The measuring probe 500 further comprises a first countermass 502, a actuator element 505, a support element 508 connecting the measuring probe 500 to a retaining ring 509, a first electrical connection 507 and a second electrical connection 506. These components of the measuring probe 500 may have features similar to those of corresponding components of the measuring probes 400 and 300 described above.

The measuring probe 500 further comprises a second countermass 537 provided between the actuator element 505 and the stylus 505. The stylus 503, the first countermass 502 and the second countermass 537 together form a body of the measuring probe 500. The support element 508 may be connected to the second countermass 537. Thus, the actuator element 505 may exhibit a force between the first countermass 503 and the second countermass 537. The second countermass 537 may be an integral component. Additionally, in some embodiments, the stylus 503 may be integral with the second countermass. This may help to improve a stability and/or a reproducibility of the elastic modes of oscillation of the measuring probe 500. In other embodiments, the stylus 503 may be connected to the second countermass 537 by soldering and/or welding, for example by means of spot welding.

In the measuring probe 500, masses of the first countermass 502, the second countermass 537 and the stylus 503 and relations between the masses may correspond to those of corresponding components of the measuring probe 400 described above with reference to Figs. 4a to 4d.

The present invention is not restricted to embodiments wherein the measuring tip 504 is adapted for scanning force microscopy. In other embodiments, the measuring tip 504 may be adapted for scanning tunneling microscopy and/or optical near field microscopy.

Furthermore, the present invention is not restricted to embodiments wherein the measuring probe 300, 400, 500 is adapted for scanning microscopy. In other embodiments, the measuring probe 300, 400, 500 may be adapted for use as a sensor in a coordinate measuring machine. For this purpose, dimensions of components of the measuring probe 300, 400, 500 may be increased to conform with the requirements of coordinate measuring machines, and the tip 304, 404, 504 or 604 may be replaced with a coordinate measuring probe of a type known to persons skilled in the art.

Moreover, the present invention is not restricted to embodiments wherein the measuring probe 300, 400 or 500 is provided in a microscope which allows an investigation of an object by means of techniques of optical far field microscopy in addition to an investigation of the object by means of techniques of scanning microscopy. In other embodiments, the optical observation unit 210 of the microscope 200 may be omitted.

## Claims

1. A measuring probe (300, 400, 500) for a measuring instrument (200), comprising:

    a body (301) having a measuring tip (304, 404, 504) connected thereto, said body (301) comprising a stylus (303, 403, 503) and a first countermass (302, 402, 502), wherein said tip (304, 404, 504) is provided at a first end (320, 420) of said stylus (303, 403, 503) and an actuator element (305, 405, 505) is provided between a second end (322, 422) of said stylus (303, 403, 503) and said first countermass (302, 402, 502); and said actuator element (305, 405, 505) is adapted to exhibit a force between the stylus (303, 403, 503) and the first countermass (302, 402, 502); **characterized by** a support element (308, 408) attached to said first countermass (302, 402, 502) and comprising an elastic material so that said body (301) has an elastic mode of oscillation wherein an amplitude of a displacement of said stylus (303, 403, 503) relative to said first countermass (302, 402, 502) is smaller than an amplitude of a displacement of said measuring tip (304, 404, 504) relative to a rest position of said measuring tip (304, 404, 504).

2. A measuring probe (300, 400, 500) according to claim 1 wherein said elastic mode of operation comprises a longitudinal oscillation of said stylus (303, 403, 503).

3. A measuring probe (300, 400, 500) according to claim 1 or 2, wherein said stylus (303, 403, 503) is detachably connected to said actuator (305, 405, 505) and said first countermass (302, 402, 502).

4. A measuring probe (300, 400, 500) according to any of claims 1 to 3, wherein said first countermass (302, 402, 502) comprises a mirror portion for optical measurement of a position of said first countermass (302, 402, 502).

5. A measuring probe (400, 500) according to any of claims 1 to 4, further comprising a second countermass (438, 537), wherein said second countermass (438, 537) is provided between said second end (322, 422) of said stylus (403, 503) and said actuator element (405, 505).

6. A measuring probe (300, 400, 500) according to any of claims 1 to 4, wherein at least one of a mass of said first countermass (302, 402, 502), a mass of a second countermass (438, 537) provided between said second end of said stylus (303, 403, 503) and said actuator element (305, 405, 505) and a sum of said mass of said second countermass (438, 537) and said mass of said first countermass (302, 402, 502) is greater than a mass of said stylus (303, 403, 503).

7. A measuring probe (400, 500) according to claim 5 or 6, wherein a mass of said first countermass (402, 502) is greater than a mass of said second countermass (438, 537).

8. A measuring probe (400, 500) according to any of claims 5 to 7, wherein said second end of said stylus (403, 503) is fixed to said second countermass (438, 537), and said actuator element (405, 505) connects said second countermass to said first countermass.

9. A measuring probe (300, 400, 500) according to any of claims 1 to 8, further comprising a damping element (355, 455) adapted to reduce a Q-factor of elastic modes of oscillation of said body (301) other than said elastic mode of oscillation.

10. A measuring probe (300, 400, 500) according to claim 8, wherein said damping element (355, 455) comprises a support element (308, 408) adapted for attachment of said body (301) to another component (309, 409) of said measuring instrument (200).

11. A measuring probe (300, 400, 500) according to claim 5 or 6 and 9 or 10, wherein a second end (322, 422) of said stylus (303, 403, 503) is connected to said second countermass (438, 537), said actuator element (305, 405, 505) connects said second countermass (438, 537) to said first countermass (302, 402, 502), and wherein said support element (308, 408) is attached to said second countermass (438, 537).

12. A measuring probe (300, 400, 500) according to any of claims 1 to 11, wherein said actuator element (305, 405, 505) comprises a piezoelectric material, a first electrode, a second electrode and a power source adapted to apply a voltage of operation being smaller than a maximum voltage of operation between said first and said second electrode, wherein said piezoelectric material is provided between said first and said second electrode; and said piezoelectric material has a coercitive field being greater than an electric field strength occurring in said piezoelectric material if said maximum voltage of operation is applied between said first electrode and said second electrode, greater than two times said electric field strength and/or greater than ten times said electric field strength.

13. A measuring probe (300, 400, 500) according to any of claims 1 to 12, wherein said actuator element (305, 405, 505) comprises a piezoelectric washer.

14. A measuring probe (300, 400, 500) according to any of claims 1 to 13, further comprising:

   a retaining ring (309) connectable to a holder (231) of a microscope (200);
   wherein the support element (308) comprises a plurality of bars (308, 408, 508) connected between the first countermass (302, 402, 502) and the retaining ring (309).

15. A method of operating a measuring instrument (200) comprising a measuring probe (300, 400, 500) according to any of claims 1 to 14, wherein said actuator element (305, 405, 505) comprises a piezoelectric actuator element having a first and a second electrode, said method comprising:

   creating a sensor output signal on the basis of a current flow through said first and said second electrode of said piezoelectric actuator element; and
   simultaneously applying an alternating voltage between said first electrode and said second electrode.

## Patentansprüche

1. Messsonde (300, 400, 500) für ein Messinstrument (200), die umfasst:

   einen Körper (301) mit einer Messspitze (304, 404, 504), die damit verbunden ist, wobei der Körper (301) einen Taststift (303, 403, 503) und eine erste Gegenmasse (302, 402, 502) umfasst,
   wobei die Spitze (304, 404, 504) an einem ersten Ende (320, 420) des Taststifts (303, 403, 503) bereitgestellt ist, und ein Aktuatorelement (305, 405, 505) zwischen einem zweiten Ende (322, 422) des Taststifts (303, 403, 503) und der ersten Gegenmasse (302, 402, 502) bereitgestellt ist; und
   wobei das Aktuatorelement (305, 405, 505) angepasst ist, eine Kraft zwischen dem Taststift (303, 403, 505) und der ersten Gegenmasse (302,402, 502) auszuüben;
   **gekennzeichnet durch**
   ein Stützelement (308, 408), das an der ersten Gegenmasse (302,402, 502) angebracht ist, und das ein elastisches Material umfasst, so dass der Körper (301) einen elastischen Schwingungsmodus aufweist, wobei eine Amplitude einer Verschiebung des Taststifts (303, 403, 503) relativ zur ersten Gegenmasse (302, 402, 502) kleiner ist als eine Amplitude einer Verschiebung der Messspitze (304, 404, 504) relativ zu einer Ruheposition der Messspitze (304, 404, 504).

2. Messsonde (300, 400, 500) nach Anspruch 1, wobei der elastische Betriebsmodus eine longitudinale Schwingung des Taststifts (303, 403, 503) umfasst.

3. Messsonde (300, 400, 500) nach Anspruch 1 oder 2, wobei der Taststift (303, 403, 503) lösbar mit dem Aktuator (305, 405, 505) und der ersten Gegenmasse (302, 402, 502) verbunden ist.

4. Messsonde (300, 400, 500) nach einem der Ansprüche 1 bis 3, wobei die erste Gegenmasse (302, 402, 502) einen Spiegelbereich zum optischen Messen einer Position der ersten Gegenmasse (302, 402, 502) umfasst.

5. Messsonde (400, 400) nach einem der Ansprüche 1 bis 4, die weiterhin eine zweite Gegenmasse (438, 537) umfasst, wobei die zweite Gegenmasse (438, 537) zwischen dem zweiten Ende (322, 422) des Taststifts (403, 503) und dem Aktuatorelement (405, 505) bereitgestellt ist.

6. Messsonde (300, 400, 500) nach einem der Ansprüche 1 bis 4, wobei eine Masse der ersten Gegenmasse (302, 402, 502) und/oder eine Masse einer zweiten Gegenmasse (438, 537) zwischen dem zweiten Ende des Taststifts (303, 403, 503) und dem Aktuatorelement (305, 405, 505) bereitgestellt ist, und eine Summe der Masse der zweiten Gegenmasse (438, 537) und der Masse der ersten Gegenmasse (302, 402, 502) größer ist als eine Masse des Taststifts (303, 403, 503).

7. Messsonde (400, 500) nach Anspruch 5 oder 6, wobei eine Masse der ersten Gegenmasse (402, 502) größer ist als eine Masse der zweiten Gegenmasse (438, 537).

8. Messsonde (400, 500) nach einem der Ansprüche 5 bis 7, wobei das zweite Ende des Taststifts (403, 503) an der zweiten Gegenmasse (438, 537) fixiert ist, und wobei das Aktuatorelement (405, 505) die zweite Gegenmasse mit der ersten Gegenmasse verbindet.

9. Messsonde (300, 400, 500) nach einem der Ansprüche 1 bis 8, die weiterhin ein Dämpfungselement (355, 455) umfasst, das angepasst ist, einen Q-Faktor von elastischen Schwingungsmoden des Körpers (300), die nicht die elastischen Schwingungsmoden sind, zu reduzieren.

10. Messsonde (300, 400, 500) nach Anspruch 8, wobei das Dämpfungselement (355, 455) ein Stützelement (308, 408) umfasst, das zum Anbringen des Körpers (301) an eine andere Komponente (309, 409) des Messinstruments (200) angepasst ist.

11. Messsonde (300, 400, 500) nach Anspruch 5 oder 6 und 9 oder 10, wobei ein zweites Ende (322, 422) des Taststifts (303, 403, 503) mit der zweiten Gegenmasse (438, 537) verbunden ist, wobei das Aktuatorelement (305, 405, 505) die zweite Gegenmasse (438, 537) mit der ersten Gegenmasse (302, 402, 502) verbindet, und wobei das Stützelement (308, 408) an der zweiten Gegenmasse (438, 537) angebracht ist.

12. Messsonde (300, 400, 500) nach einem der Ansprüche 1 bis 11, wobei das Aktuatorelement (305, 405, 505) ein piezoelektrisches Material, eine erste Elektrode, eine zweite Elektrode und eine Energiequelle umfasst, die angepasst ist, eine Betriebsspannung anzulegen, die kleiner ist als eine maximale Betriebsspannung zwischen der ersten und der zweiten Elektrode, wobei das piezoelektrische Material zwischen der ersten und der zweiten Elektrode bereitgestellt ist; und wobei das piezoelektrische Material ein Koerzitivfeld aufweist, das größer als eine elektrische Feldstärke, die in dem piezoelektrischen Material auftritt, wenn die maximale Betriebsspannung zwischen der ersten Elektrode und der zweiten Elektrode angelegt ist, größer als das Zweifache der elektrischen Feldstärke und/oder größer als das 10-fache der elektrischen Feldstärke ist.

13. Messsonde (300, 400, 500) nach einem der Ansprüche 1 bis 12, wobei das Aktuatorelement (305, 405, 505) eine piezoelektrische Beilagscheibe umfasst.

14. Messsonde (300, 400, 500) nach einem der Ansprüche 1 bis 13, weiter umfassend:

einen Haltering (309), der mit einer Halterung (231) eines Mikroskops (200) verbindbar ist; wobei das Stützelement (308) eine Vielzahl von Stäben (308, 408, 508) umfasst, die zwischen der ersten Gegenmasse (302, 402, 502) und dem Haltering (309) eingefügt sind.

15. Verfahren zum Betreiben eines Messinstruments (200), das eine Messsonde (300, 400, 500) nach einem der Ansprüche 1 bis 14 umfasst, wobei das Aktuatorelement (305, 405, 505) ein piezoelektrisches Aktuatorelement mit einer ersten und einer zweiten Elektrode umfasst, wobei das Verfahren umfasst:

Erzeugen eines Sensorausgangssignals auf der Basis eines Stromflusses durch die erste und die zweite Elektrode des piezoelektrischen Aktuatorelements; und gleichzeitiges Anlegen einer Wechselspannung zwischen der ersten Elektrode und der zweiten Elektrode.

**Revendications**

1. Sonde de mesure (300, 400, 500) destinée à un instrument de mesure (200), comprenant :

un corps (301) comportant une pointe de mesure (304, 404, 504) reliée à celui-ci, ledit corps (301) comprenant un stylet (303, 403, 503) et un premier contrepoids (302, 402, 502), ladite pointe (304, 404, 504) étant prévue au niveau d'une première extrémité (320, 420) dudit stylet (303, 403, 503) et un élément d'actionneur (305, 405, 505) étant prévu entre une seconde extrémité (322, 422) dudit stylet (303, 403, 503) et ledit premier contrepoids (302, 402, 502), et ledit élément d'actionneur (305, 405, 505) est conçu pour exercer une force entre le stylet (303, 403, 503) et le premier contrepoids (302, 402, 502),
**caractérisé par**
un élément de support (308, 408) fixé au dit premier contrepoids (302, 402, 502) et comprenant un matériau élastique de sorte que ledit corps (301) possède un mode d'oscillation élastique dans lequel l'amplitude de déplacement dudit stylet (303, 403, 503) par rapport au dit premier contrepoids (302, 402, 502) est plus petite que l'amplitude de déplacement de ladite pointe de mesure (304, 404, 504) par rapport à une position de repos de ladite pointe de mesure (304, 404, 504).

2. Sonde de mesure (300, 400, 500) selon la revendication 1, dans laquelle ledit mode de fonctionnement élastique comprend une oscillation longitudinale dudit stylet (303, 403, 503).

3. Sonde de mesure (300, 400, 500) selon la revendication 1 ou la revendication 2, dans laquelle ledit stylet (303, 403, 503) est relié tout en étant démontable au dit actionneur (305, 405, 505) et au dit premier contrepoids (302, 402, 502).

4. Sonde de mesure (300, 400, 500) selon l'une quelconque des revendications 1 à 3, dans laquelle ledit premier contrepoids (302, 402, 502) comprend un élément formant miroir destiné à une mesure optique de la position dudit premier contrepoids (302, 402, 502).

5. Sonde de mesure (300, 400, 500) selon l'une quelconque des revendications 1 à 4, comprenant en outre un second contrepoids (438, 537), ledit second contrepoids (438, 537) étant prévu entre ladite seconde extrémité (322, 422) dudit stylet (403, 503) et ledit élément d'actionneur (405, 505).

6. Sonde de mesure (300, 400, 500) selon l'une quelconque des revendications 1 à 4, dans laquelle au moins l'une de la masse dudit premier contrepoids (302, 402, 502), de la masse d'un second contrepoids (438, 537) prévu entre ladite seconde extrémité dudit stylet (303, 403, 503) et ledit élément d'actionneur (305, 405, 505), et de la somme de ladite masse dudit second contrepoids (438, 537) et de ladite masse dudit premier contrepoids (302, 402, 502), est supérieure à la masse dudit stylet (303, 403, 503).

7. Sonde de mesure (300, 400, 500) selon la revendication 5 ou la revendication 6, dans laquelle la masse dudit premier contrepoids (402, 502) est supérieure à la masse dudit second contrepoids (438, 537).

8. Sonde de mesure (300, 400, 500) selon l'une quelconque des revendications 5 à 7, dans laquelle ladite seconde extrémité dudit stylet (403, 503) est fixée au dit second contrepoids (438, 537), et ledit élément d'actionneur (405, 505) relie ledit second contrepoids au dit premier contrepoids.

9. Sonde de mesure (300, 400, 500) selon l'une quelconque des revendications 1 à 8, comprenant en outre un élément d'amortissement (355, 455) conçu pour réduire le facteur de qualité Q de modes d'oscillation élastiques dudit corps (301) différents dudit mode d'oscillation élastique considéré.

**10.** Sonde de mesure (300, 400, 500) selon la revendication 8, dans lequel ledit élément d'amortissement (355, 455) comprend un élément de support (308, 408) conçu pour la fixation dudit corps (301) à un autre composant (309, 409) dudit instrument de mesure (200).

**11.** Sonde de mesure (300, 400, 500) selon la revendication 5 ou la revendication 6 et selon la revendication 9 ou la revendication 10, dans laquelle une seconde extrémité (322, 422) dudit stylet (303, 403, 503) est reliée au dit second contrepoids (438, 537), ledit élément d'actionneur (305, 405, 505) reliant ledit second contrepoids (438, 537) au dit premier contrepoids (302, 402, 502), et ledit élément de support (308, 408) étant fixé au dit second contrepoids (438, 537).

**12.** Sonde de mesure (300, 400, 500) selon l'une quelconque des revendications 1 à 11, dans laquelle ledit élément d'actionneur (305, 405, 505) comprend un matériau piézoélectrique, une première électrode, une seconde électrode et une source d'alimentation conçue pour appliquer une tension de fonctionnement inférieure à une tension maximale de fonctionnement entre ladite première et ladite seconde électrode, ledit matériau piézoélectrique étant prévu entre ladite première et ladite seconde électrode ; et ledit matériau piézoélectrique présente un champ coercitif supérieur à l'intensité d'un champ électrique apparaissant dans ledit matériau piézoélectrique si ladite tension maximale de fonctionnement est appliquée entre ladite première électrode et ladite seconde électrode, supérieur à deux fois ladite intensité de champ électrique et/supérieur à dix fois ladite intensité de champ électrique.

**13.** Sonde de mesure (300, 400, 500) selon l'une quelconque des revendications 1 à 12, dans laquelle ledit élément d'actionneur (305, 405, 505) comprend une rondelle piézoélectrique.

**14.** Sonde de mesure (300, 400, 500) selon l'une quelconque des revendications 1 à 13, comprenant en outre :

une bague de retenue (309) pouvant être raccordée à un support (231) de microscope (200), dans laquelle l'élément de support (308) comprend une pluralité de barres (308, 408, 508) reliées entre le premier contrepoids (302, 402, 502) et la bague de retenue (309) .

**15.** Procédé de mise en oeuvre d'un instrument de mesure (200) comprenant une sonde de mesure (300, 400, 500) conforme à l'une quelconque des revendications 1 à 14, ledit élément d'actionneur (305, 405, 505) comprenant un élément d'actionneur piézoélectrique possédant une première et une seconde électrode, ledit procédé comprenant :

la génération d'un signal de sortie de capteur sur la base d'une circulation de courant au travers de ladite première et de ladite seconde électrode dudit élément d'actionneur piézoélectrique, et
l'application simultanée d'une tension alternative entre ladite première électrode et ladite seconde électrode.

FIG. 1
(prior art)

FIG. 2a

200

231

232

L1

11

201

202

203

300

FIG. 2b

FIG. 3a

350

351

355                    355

357

359

355

354                    354

356        354                354        356

353

352

358

FIG. 3b

FIG. 3c

FIG. 4a

FIG. 4b

FIG. 4c

FIG. 4d

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1653478 A
- JP 2002162219 A